Europäisches Patentamt

European Patent Office

Office européen des brevets

(11) Publication number: **0 301 855**
A2

# (12) EUROPEAN PATENT APPLICATION

(21) Application number: 88306957.7

(22) Date of filing: 28.07.88

(51) Int. Cl.⁴: **B 60 R 1/06**

(30) Priority: 28.07.87 GB 8717853

(43) Date of publication of application:
01.02.89 Bulletin 89/05

(84) Designated Contracting States: DE ES FR GB IT

(71) Applicant: CLEARPLAS LIMITED
Bayton Road
Exhall Coventry CV7 9EL (GB)

(72) Inventor: Casey, Michael J.,
58, Hazel Close, Whitton,
Twickenham, Middlesex TW2 7NR (GB)

Brooks, Richard,
81, Holly Bush Lane,
Hampton, Middlesex TW12 2QY (GB)

(74) Representative: Warren, Keith Stanley et al
BARON & WARREN 18 South End Kensington
London W8 5BU (GB)

(54) Vehicle exterior rear view mirror assembly.

(57) An exterior rear view mirror assembly for a motor vehicle comprises an adjustable mirror head (6) having a movable bearing (14) engaged with the outside of a fixed bearing (21) mounted on the exterior (1) of the vehicle. A clamping mechanism (25), which urges the bearings into engagement and maintains the mirror head in a set position, comprises a link (26) attached to the mirror head and projecting through the fixed bearing (21) into the interior of the vehicle, clamping means including a clamping head (42) arranged to bear against the inside of the fixed bearing, and a spring (53) acting between the link and the clamping head so as resiliently to clamp the fixed bearing between the movable bearing and the clamping head. The clamping means is formed from two identical parts slidably located in grooves in the link (26) and each of which comprises a head part, a shank (47) projecting rearwardly from the head part and a small lug (49) at the opposite end of the shank. It is controlled by a rotatable handle (59) which is mounted on the inner end of the link (26) and is coupled to the abutments (49) of the clamping means via a cam block (64) slidably mounted on the link (26) and having a cam surface (62) cooperating with a cam surface (61) on the handle. Turning of the handle withdraws the clamping means along the link (26) against the action of the spring (53) so as to release the clamping means and permit adjustment of the mirror head by rotation or rocking of the link.

Fig.1

**Description**

## VEHICLE EXTERIOR REAR VIEW MIRROR ASSEMBLY

The present invention relates to exterior rear view mirror assemblies for motor vehicles of the type in which the mirror head is adjustably mounted on the exterior of the vehicle and, more particularly, to such a rear view mirror assembly in which the mirror head can be remotely controlled or adjusted from inside the vehicle by a mechanical linkage.

The present invention consists in an exterior rear view mirror assembly for a motor vehicle, comprising an adjustable mirror head having movable bearing means cooperating with the outside of a fixed bearing member adapted to be mounted on the exterior of the vehicle, a clamping mechanism for urging said bearings in engagement and maintaining the mirror head in a set position, said clamping mechanism comprising link means attached to the mirror head and projecting through the fixed bearing member, clamping means having a clamping head arranged to bear against the inside of the fixed bearing member, a spring acting between the link means and the clamping means so as resiliently to clamp the fixed bearing member between the movable bearing means and the clamping head, and a handle rotatably mounted on the link means or the clamping means, on the inside of the fixed bearing member, and coupled to the other one of these two components by a cam device, whereby turning of the handle moves the link means and clamping means relatively to one another against the action of the spring so as to release the clamp on the fixed bearing member and permit adjustment of the mirror head.

Preferably, the arrangement of the bearings and clamping mechanism is such as to allow the movable bearing and, hence, the mirror head, to rotate relatively to the fixed bearing member and also to rock in a generally horizontal plane, when the clamping mechanism is released. These two movements may be controlled from inside a vehicle fitted with the mirror assembly by manipulating the handle so as to rotate the link means about its own axis and also rock the link means about another axis generally perpendicular thereto. To this end, the movable bearing means may comprise a concave bearing surface in the mirror head cooperating with a convex bearing surface on the outside of the fixed bearing member, and the link means may project through a slot in the fixed bearing member which permits rotation of the link means as well as rocking thereof.

In a preferred embodiment, the link means comprises a rod or shaft attached at one end to the mirror head and projecting through a slot in the fixed bearing member which permits rotational and rocking movement of the shaft relatively to the fixed bearing, and the clamping means is slidably mounted on the shaft on the inside of the fixed bearing with its clamping head disposed substantially coaxially with respect to the shaft. The clamping spring may be a compression spring disposed between the clamping head and retaining means fixed to the shaft.

The handle may be rotatably mounted on the shaft about an axis generally perpendicular thereto and the cam device may comprise a cam surface rotatable with the handle and cooperating with another cam surface associated with the clamping means. For example, the cam surface associated with the clamping means may be formed on a cam block mounted for sliding movement coaxially with respect to the shaft and arranged to engage with abutments projecting from the clamping means, whereby relative movement of the cam surfaces on the handle and cam block, upon turning of the handle, moves the cam block in a direction away from the mirror head which, in turn, acts on the abutments of the clamping means to pull the clamping head away from the inside of the fixed bearing member against the action of the clamping spring.

In order that the invention may be more readily understood, reference will now be made to the accompanying drawings, in which:-

Figure 1 is a horizontal section through one embodiment of the invention, which is shown fitted to the cheater plate in the front window frame of a motor vehicle,

Figure 2 is a rear view of the mirror assembly of Figure 1,

Figure 3 is a section on the line III-III of Figure 1,

Figure 4 is a detailed view of the link means,

Figures 5 and 6 are side and end views of one of the two clamping members forming the clamping means, and

Figures 7 and 8 are fragmentary views illustrating the cam device used for controlling the clamping mechanism.

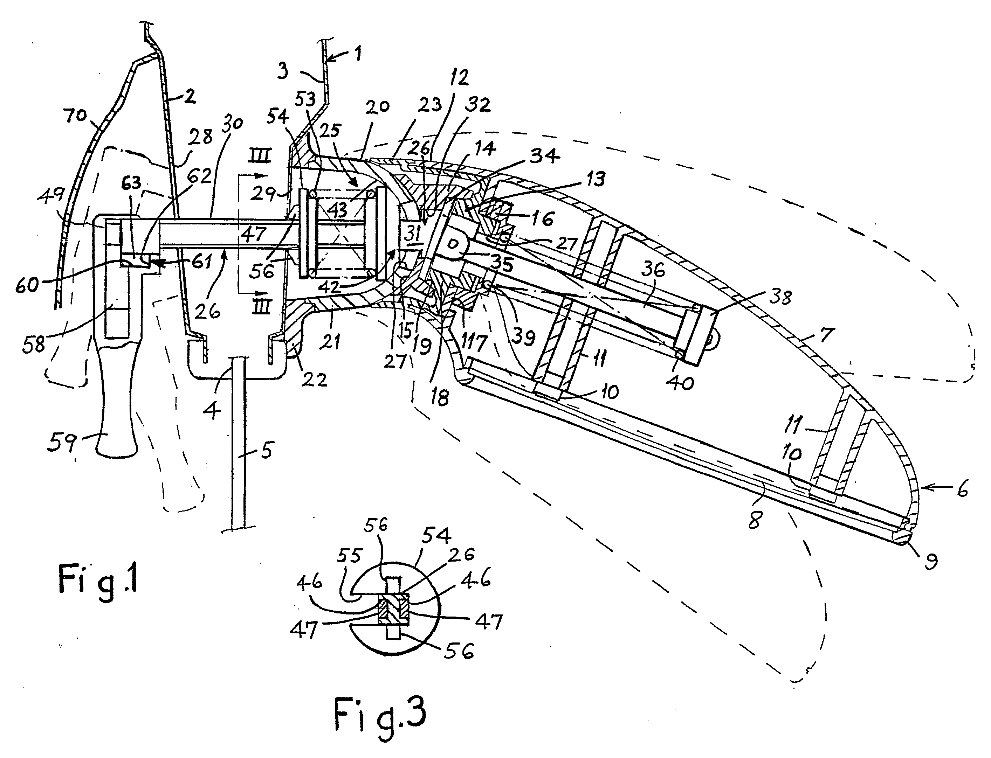

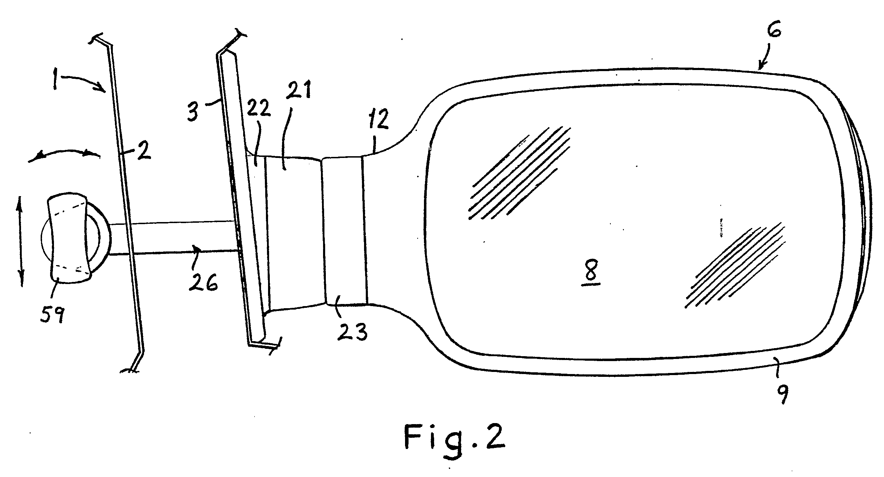

Referring to Figures 1 and 2 of the drawings the mirror assembly is shown mounted on a triangular part 1, commonly referred to as the cheater plate, located in the front lower corner of the front window frame. This cheater plate comprises inner and outer skins 2,3 and at its rear edge has a guide groove 4 for the lower front edge of the front glass window panel 5.

The mirror assembly has a mirror head 6 comprising a shroud 7 moulded from plastics material and a mirror glass 8 on its rear side which is fixed in position by a plastic frame 9 snapped into engagement with the rear edge of the shroud 7. To prevent the mirror glass vibrating, when fitted in position, the back of the mirror glass presses against four pads 10 of rubber or other resilient material fitted into the adjacent ends of four support tubes 11 moulded integrally with the inside of the shroud.

At its inner end adjacent the cheater plate 1, the shroud 7 is formed with a generally circular hollow boss 12 which mounts an annular indexing part 13 and a movable annular bearing part 14 having a part-spherical concave bearing surface 15. The indexing part 13 is secured within the shroud by means of a nut 16 which clamps it to a flange 17 moulded on the inside of the shroud and the indexing part has a male indexing portion 18 which fits within a cooperating indexing cavity 19 in the adjacent side of the bearing part 14 so as to maintain the shroud in a predetermined orientation with respect to the bearing part 14.

The bearing surface 15 of the bearing part 14 cooperates with a hemispherical bearing surface 20 on a fixed dome-shaped bearing member 21 mounted on the outside of the cheater plate 1. This fixed bearing member is fastened to the base ring 22 secured to the outer skin 3 of the cheater plate by screws (not shown). The annular inner edge portion 23 of the indexing part 13 forms a continuation of the boss 12 of the shroud and serves partially to conceal the outside of the bearing member 21 and protect the bearing surfaces 15,20.

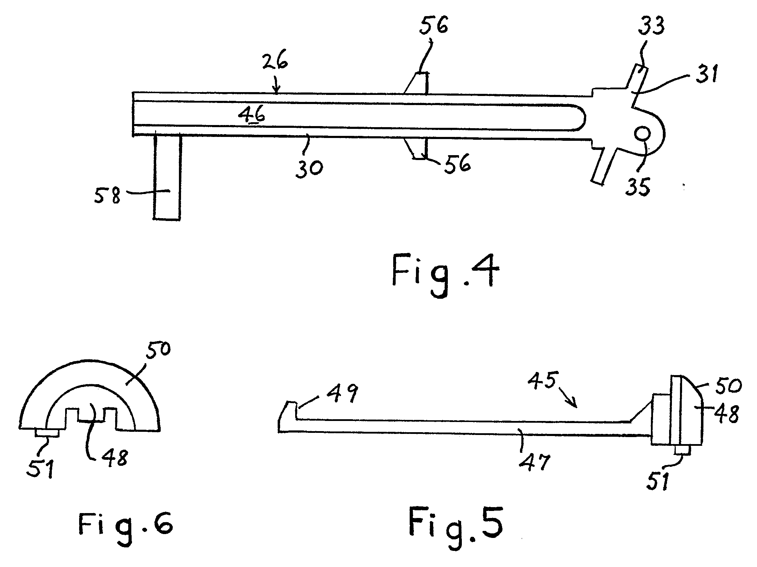

The mirror head 6 is connected to the fixed bearing member 21 by a clamping or retaining mechanism, generally indicated at 25, which urges the bearing surfaces 15,20 into engagement and retains the mirror head in its set position on the fixed bearing member. This clamping mechanism includes a link or shaft 26 which is attached to the movable bearing part 14 and which projects through a slot 27 in the fixed bearing member and through openings 28,29 in the inner and outer skins 2,3 of the cheater plate, into the inside of the vehicle. As illustrated in more detail in Figures 3 and 4, the shaft 26 has a shank 30 of generally H-shaped cross section having a head 31 of generally rectangular shape in cross section at its outer end. The head 31 is engaged in a cooperating opening 32 in the bearing part 14 and has a flange 33 engaging a shoulder 34 in the opening to prevent the head being pulled through the opening. The head has an inclined outer end so as to accord with the inclination of the mirror head relatively to the fixed bearing member. Projecting from the head are two spaced lugs 35 between which is pivoted one end of a rod 36 via which the indexing part 13 is held in engagement with the indexing cavity 19 of the bearing part 14 and, hence, the mirror head is coupled to the bearing part 14. The rod 36 is pivoted at its inner end to the lugs 35 by means of a pivot pin and projects into the shroud 7 behind the mirror glass 8. Disposed about the rod between a head 38 on the outer end of the latter and a retaining rebate 39 on the fastening nut 16 is a compression spring 40 which is able to compress to permit the indexing part 13 to rock with respect to the indexing cavity 19 in the event that the mirror head is knocked forwardly or rearwardly more than the adjustment allowed by the clamping mechanism.

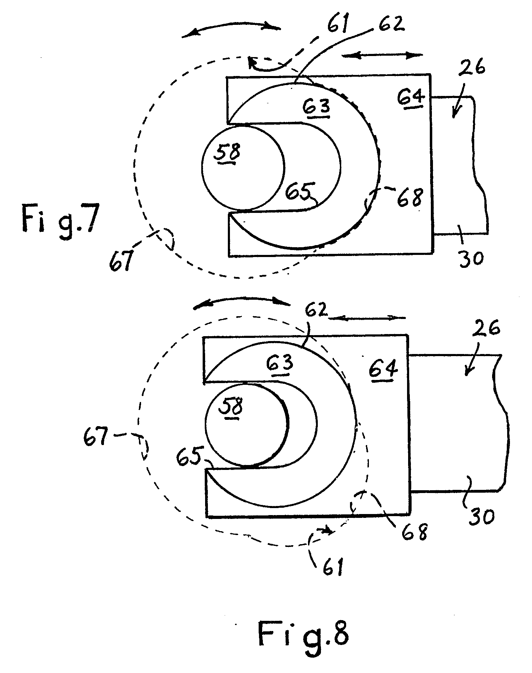

The clamping mechanism 25 further comprises clamping means mounted on the shaft 26 on the inside of the fixed bearing member 21 and including a two-part clamping head 42 arranged to bear against the inside spherical surface 43 of the hollow bearing member 21 to provide a clamping action thereon between the clamping head 42 and the movable bearing part 14 of the mirror head. The clamping means comprises two identical parts 45 slidably mounted in the upper and lower grooves 46 of the H-section shank 30 of the shaft 26 (Fig. 3). As illustrated in more detail in Figures 5 and 6, each part 45 of the clamping means comprises a strip-like shank 47 having a head part 48 at one end and a small projecting lug 49 at the opposite end. The head part has a part spherical surface 50 on its outer periphery corresponding to the inside spherical surface 43 of the fixed bearing member 21 and, when the two parts 45 of the clamping means are assembled to the shaft 26, the head parts 48 cooperate together to form the clamping head 42. When assembled to the shaft 26, small bosses on the radial periphery of each head part 48 engage with the opposing radial periphery of the other head part to prevent the clamping parts from twisting.

The two-part clamping head 42 is urged into engagement with the fixed bearing member by a compression spring 53 located about the shaft 26 between the head 42 and a retaining washer 54 fitted onto the shaft via a locating slot 55 (Fig. 3) and abutting two lugs 56 projecting from opposite sides of the shaft 26. As a result, the fixed bearing member 21 is resiliently clamped between the movable bearing part 14 connected to the shaft 26 and the two-part clamping head 42.

The shaft 26 and the two parts 45 of the clamping means project into the inside of the vehicle through the openings 28,29 in the skins of the cheater plate and are substantially co-terminus at their inner ends. Projecting horizontally from one side of the shaft 26 at or adjacent its inner end is a pin 58 which forms a pivot for a rotatable handle or knob 59. The latter has a cavity 60 at its end adjacent the shaft 26 defining a cam surface 61 (Figs. 7 and 8) which cooperates with a part-circular cam surface 62 formed on a part-circular boss 63 projecting from a channel-shaped cam block 64 slidably mounted on the shaft 26 and the assembled clamping means. The cam boss 63 projects from the bottom wall of the channel-shaped cam block and into the cavity 60 in the handle whilst the arms of the channel project over the top and bottoms of the H-section of the shaft 26 and the strip-like shanks 47 of the clamping parts 45 located therein. The channel-shaped cam block 64 and its part-circular cam boss 63 have a slot 65 therein which embraces the pivot pin 58 and enables the cam block to slide relatively thereto in response to turning of the handle 59 and resulting movement of the cam block. The upper and lower arms of the cam block engage the lugs 49 at the adjacent ends of the clamping parts 45.

The cam surface 61 formed about the inside periphery of the cavity 60 in the handle 59 comprises a cylindrical surface portion 67 concentric with the rotational axis of the handle 59 and of larger diameter than the diameter of the cam boss 63, and an eccentric lobe portion 68 having a cylindrical surface of substantially the same diameter as the cam boss 63. When the eccentric portion 68 and the cam boss are in engagement, as illustrated in Figure 7, the two-part clamping head 42 moves to the right, as illustrated in Figure 1, so as to clamp the fixed bearing member 21 between the bearing part 14 and the clamping head, thereby retaining the mirror head 6 in a set position. To adjust the mirror head, the handle 59 is turned in either direction which causes the surface portion 67 of the cam cavity 60 to move into contact with the cam boss 63, as illustrated in Figure 8, thereby moving the cam block to the left, as illustrated in Figure 1 and compressing the spring 53. This action reduces the clamping force or load between the clamping head 42 and the movable bearing part 14 and allows the mirror to be adjusted by rotation about the axis of the shaft 26 or by rocking in a horizontal plane between limit positions defined by opposite ends of the slot 27 in the fixed bearing member. Both these adjustments are achieved from inside the vehicle by appropriately manipulating the handle 59, that is, either by moving it upwardly or downwardly or backwards and forwards so as to rotate the shaft 26 or rock it in a generally horizontal plane about a vertical fulcrum defined by the fixed bearing member 21. Upon completion of the adjustment, the handle is released, allowing it to rotate into the position in which the cam surface portion 68 engages with the cam boss 63 thereby releasing the two-part clamping means and enabling the clamping head 42 to be forced against the inside of the fixed bearing, under the action of the spring 53, in order to reclamp the mirror head to the fixed bearing. Assuming the knob is not overturned, the action of the spring 53 will automatically return the handle to the clamping position, when the handle is released, and without any manual assistance.

The inner end of the clamping mechanism, the handle and the cam device may be concealed behind a cowl 70 extending from the inner skin 2 of the cheater plate, the handle projecting through an opening between the inner skin and the cowl at the rear of the latter in order to enable it to be gripped and manipulated.

Whilst a particular embodiment has been described, it will be understood that modifications can be made without departing from the scope of the invention.

**Claims**

1. An exterior rear view mirror assembly for a motor vehicle, comprising an adjustable mirror head (6) having a movable bearing (14) cooperating with the outside of a fixed bearing (21) adapted to be mounted on the exterior of the vehicle, a clamping mechanism (25) for urging said bearings into engagement and maintaining the mirror head in a set position, said clamping mechanism (25) comprising link means (26) attached to the mirror head and projecting through the fixed bearing (21), clamping means having a clamping head (42) arranged to bear against the inside of the fixed bearing, and spring means (53) acting between the link means and the clamping means so as resiliently to clamp the fixed bearing between the movable bearing (14) and the clamping head (42), and a handle (59) movably mounted on one of the link means (26) or the clamping means, on the inside of the fixed bearing (21), and coupled to the other one thereof by a cam device (61,62), whereby movement of the handle adjusts the link means and clamping means relatively to one another against the action of the spring means (53) so as to release the clamping action on the fixed bearing (21) and permit adjustment of the mirror head.

2. A rear view mirror assembly according to claim 1, wherein the bearings (14,21) and the clamping mechanism (25) are adapted to allow the movable bearing (14) and, hence, the mirror head (6), to rotate relatively to the fixed bearing (21) and also to rock in a generally transverse plane, when the clamping mechanism is released.

3. A rear view mirror assembly according to claim 2, wherein the movable bearing (14) comprises a concave bearing surface (15) cooperating with a convex bearing surface (20) of the fixed bearing (21), and the link means (26) projects through a slot (27) in the fixed bearing adapted to permit rotation of the link means as well as rocking thereof in a generally transverse plane.

4. A rear view mirror assembly according to claim 1, 2 or 3, wherein the link means comprises a rod or shaft (26) attached at one end to the mirror head (6) and projecting through the fixed bearing (21), and the clamping means is slidably mounted on the shaft (26).

5. A rear view mirror assembly according to claim 4, wherein the spring means comprises a compression spring (53) disposed between the clamping head (42) and retaining means (56) fixed to the shaft (26).

6. A rear view mirror assembly according to any preceding claim, wherein the handle (59) is rotatably mounted on the link means (26) for turning about an axis (58) generally perpendicular thereto, and the cam device comprises a cam surface (61) rotatable with the handle and cooperating with another cam surface (62) associated with the clamping means.

7. A rear view mirror assembly according to claim 6, wherein the cam surface (62) associated with the clamping means is disposed on a cam block (64) slidably mounted on the link means (26) and engagable with the clamping means, whereby relative movement of the cam surfaces (61,62) on the handle and cam block, upon turning of the handle, moves the cam block (64) in a direction to withdraw the clamping head (42) from the fixed bearing (21) against the action of the spring means (53).

8. A rear view mirror assembly according to claim 7, wherein the clamping means includes shank means (47) projecting rearwardly from the clamping head (42) along the link means (26) and having abutment means (49) for engagement with the cam block (64), whereby movement of the cam block away from the fixed bearing in response to turning of the handle (59) withdraws the clamping head (42) from the fixed bearing (21).

9. A rear view mirror assembly according to claim 8, wherein the clamping means is formed in two parts (45) slidably mounted in the link means (26), each part (45) comprising a shank (47) having a part (48) of the clamping head at one end thereof and an abutment (49) at the opposite end for engaging the cam block (64).

10. A rear view mirror assembly according to claim 7, 8 or 9, wherein the handle (59) is rotatably mounted on a pivot member (58) projecting from the link means (26) and has a cavity (60) at its end adjacent the link means defining the cam surface (61), and wherein the cooperating cam surface (62) of the cam block (64) is formed on a boss (63) projecting into the cavity from the cam block.

Fig.1

Fig.3

Fig.2

0301855

Fig.4

Fig.6

Fig.5

0301855

Fig.7

Fig.8